# EUROPEAN PATENT SPECIFICATION

(11) **EP 1 591 713 B1**
(45) Date of publication and mention of the grant of the patent: **14.04.2010**
(21) Application number: 04010203.0
(22) Date of filing: 29.04.2004
(51) Int. Cl.: F16M 11/28

(54) **Suspension arm**
Auslegeraufhängung
Bras suspendu

(43) Date of publication of application: 02.11.2005
(73) Proprietor: Lin, Chin-Chih, Taoyuan Hsien (TW)
(72) Inventor: Lin, Chin-Chih, Taoyuan Hsien (TW)
(74) Representative: Viering, Jentschura & Partner

(56) References cited:
- EP-A- 1 139 003
- DE-U- 8 913 302
- FR-A- 1 416 985
- FR-A- 2 626 052
- TW-Y- 579 917
- US-A1- 2004 035 994
- US-B1- 6 702 238
- PATENT ABSTRACTS OF JAPAN vol. 018, no. 018 (P-1673), 12 January 1994 (1994-01-12) -& JP 05 256668 A (MATSUSHITA ELECTRIC IND CO LTD), 5 October 1993 (1993-10-05)

## Description

### BACKGROUND OF THE INVENTION

### I. Field of the Invention:

This invention relates generally to a suspension arm and, more specifically, to a suspension arm that holds an article on one side, the other side is fixed on a stationary.

### II. Description of the Prior Art:

Heretofore, it is known that suspension arms are used in many places, such as paper shelves in the offices, telephone holders. The suspension arms can hold the articles and keep a height difference with the stationary, such scheme is very helpful for space arrangement.

A good suspension arm in addition to hold articles, it must also be adjustable with the distance, turned right/left and up/down for different application and different users. All the manufacturers are working toward this goal to meet ergonomics requirement.

New high technology products keep rolling out, such as flat panel displays, the LCD displays, LCD TV's gradually replace the traditional CRT TV's for flat panel displays have the light, thin, short and small advantages. Some manufacturers design suspension arm products for flat panel displays that are adjustable in all directions. However when users adjust the distance of most of the known suspension arms, they still have to adjust the angle that causes inconvenience and troublesome.

Based on the deficient described above, the applicant already had Taiwan Patent No. 207025 and 208483 (US Patent No. 6,672,553). However different users have different heights the view angles will vary, and to adjust the height of the known suspension arms is by adjusting the distance thus changes the distance.

US 2004/035994 A1 discloses a display apparatus. The display apparatus has a display main body provided with a screen, a base member which supports the display main body, and a cylinder assembly provided between the display main body and the base member to liftably support the display main body. The cylinder assembly is combined with the base member and has a cylinder filled with gas in a pressurized inside thereof, a piston slidably provided in the cylinder, and a cylinder rod that extends and retracts from the cylinder. Therefore the cylinder assembly enabled the positioning of the display apparatus.

DE 89 13 302.1 discloses a device for latching a deck lid of a car. The device has a retractable shaft which is slidably arranged in an inner sleeve. One end of the retractable shaft is disposed at a spring. Furthermore the known device has clamping jaws which can fix the retractable shaft in a predetermined position. The clamping jaws are integrally formed with the inner sleeve.

EP-A-1 139 003 describes a display support system comprising a vertical post on which an arm is pivotally mounted. The vertical position of the arm relative to the post can adjusted by fitting an O-ring into one of several annular recesses provided along the length of the post, the arm resting on the O-ring and being supported thereby.

### SUMMARY OF THE INVENTION

It is therefore a primary object of the invention to provide a suspension arm that comprises a rising/descending device consisting of an inner sleeve; a retractable shaft and an elastic body inside, an outer sleeve connect connected to the inner sleeve, a clip ring on the top open of said outer sleeve. The outer sleeve can revolve on the inner sleeve, when the user presses the clip ring to press or release said retractable shaft and make said retractable shaft rise or descend on top of the outer sleeve; a connecting axis is in torsion structure with a pillar shape connecting base and a central axis slot, an clip cover with two slices beside a compression ring stretching from top to bottom, all covered by the connecting base, a supporting axis of said retractable shaft passes the wedge holes of two said slices, an axis slot in between and combines said supporting axis with a connecting device to wrap and compress the connecting base and let said clip cover revolvable; a connecting mechanism connects to said clip cover, the connecting mechanism connects the article to rise, descend, revolve and adjust in all directions with the rising/descending device; and a tight connector is located around the retractable shaft, the tight connector includes at least one ring is located between two shaft rings to connect to engage said inner sleeve.

### BRIEF DESCRIPTION OF THE DRAWINGS

The accomplishment of the above-mentioned object of the present invention will become apparent from the following description and its accompanying drawings which disclose illustrative an embodiment of the present invention, and are as follows:
FiG 1 is an assembly view of the present invention;
FIG 2 is a cross-sectional view of the present invention;
FIG 3 is a cross-sectional application view of the present invention;
FIG. 4a is the first application view of the present invention;
FIG 4b is the second application view of the present invention;
FIG. 4c is the third application view of the present invention;
FIG. 5 is an application view of a further embodiment of the present invention.

### DESCRIPTION OF THE PREFERRED EMBODIMENT

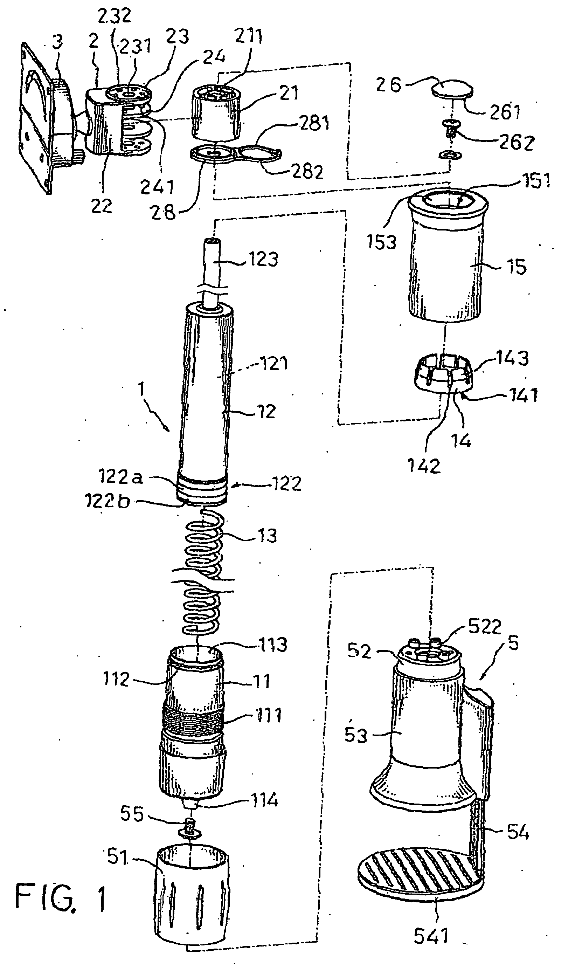

Referring to FIGS 1 to 3, the present invention comprises a rising/descending device 1, a connecting axis 2 and a connecting mechanism 3.

The function of each component is described as following: The rising/descending device 1 further consists of an inner sleeve 11, a retractable shaft 12, an elastic body 13, a clip ring 14 and an outer sleeve 15. The inner sleeve 11 con ects to a clip base 5 on the bottom; the clip base 5 clips to a stationary object such as a table, a threads section 111 is on the middle of the inner sleeve 11 to connect to the outer sleeve 15, a fastening section 112 is on top of the inner sleeve 11 to connect to the clip ring 14, an inner chamber 113 is on the center of the inner sleeve 11 to position and contain the elastic body 13.

The retractable shaft 12 is inserted into the inner chamber 113, a hollow shaft chamber 121 contains the other end of the elastic body 13 that makes the retractable shaft 12 movable inside the inner sleeve 11. In order to have the retractable shaft 12 move vertically and stably, a tight connector 122 is installed on the bottom of the retractable shaft 12, such as at least one 0 ring 122b is between two shaft rings 122a. A supporting axis 123 passing through the axis 2 is on top of the retractable shaft 12 to make all the components on the retractable shaft 12 revolve 360°. A screw 262 connects the supporting axis 2 to the supporting axis 123.

The elastic body 13 is preferred to be a spring in real application. However, spring is not the only choice, all the other elastic components that can have the retractable shaft 12 retract are available.

The clip ring 14 connects to the fastening section 112 on the top of the inner sleeve 11 with a fastening part 141 on the bottom; several slots 142 are on the top of the clip ring 14, several oblique wings 143 bend toward the center.

The outer sleeve 15 is in tube shape, a tube threads 152 is installed near the bottom of the inner sleeve tube 151 to connect to the threads section 111 of the inner sleeve 11, and further makes the outer sleeve 15 revolve around the inner sleeve 11; a compression wall 153 is on top of the sleeve tube 151 to connect to the oblique wings 143 of the clip ring 14.

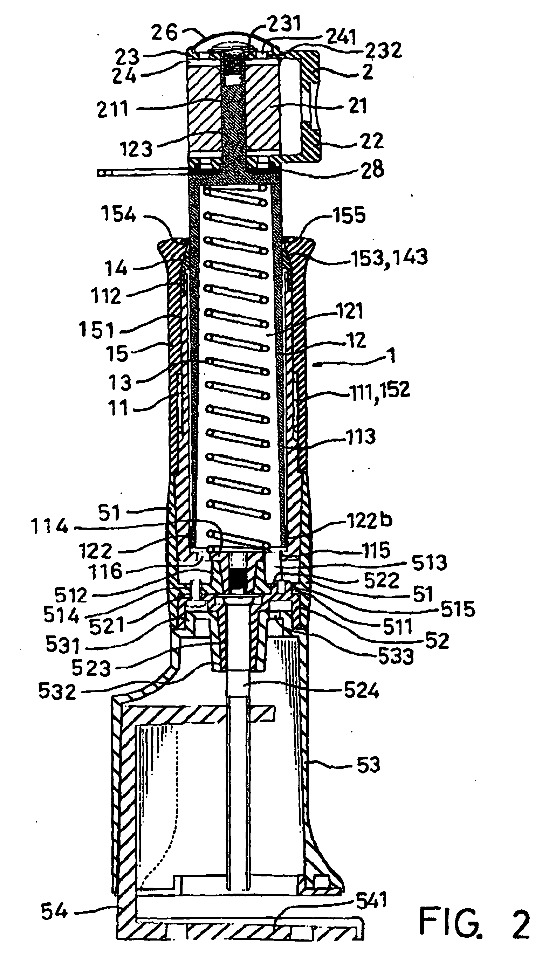

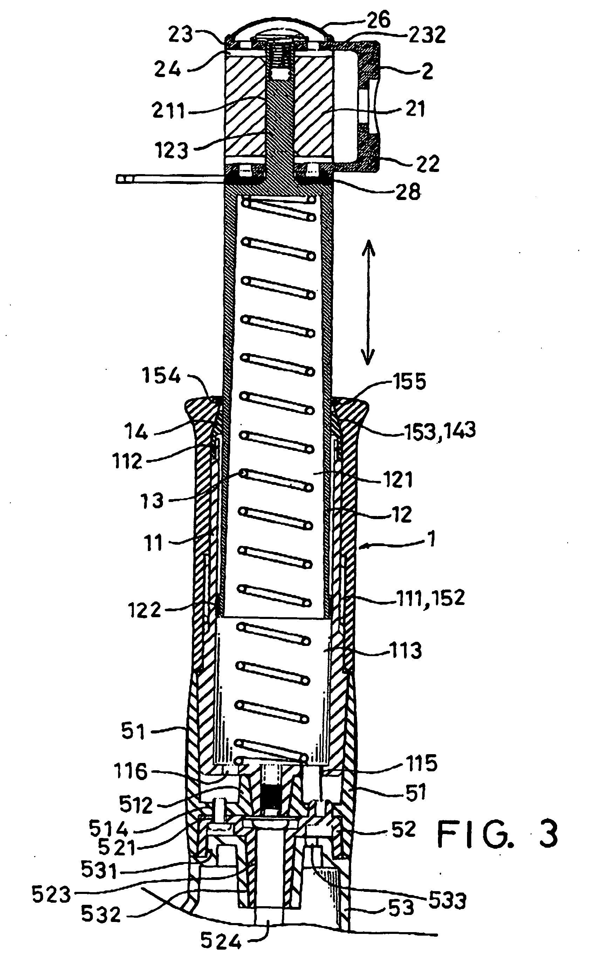

Referring to FIGS. 2 and 3, when users revolve the outer sleeve 15 to loose clip ring 14 and make the retractable shaft 12 go up or down to the desired location, then revolves the outer sleeve 15 reversely to have the clip ring 14 tighten the retractable shaft 12 and fix onto the position, such scheme can adjust the position of the whole structure. A wall slot 154 is formed on the opening of the compression wall 153, an O ring 155 is placed onto the wall slot 154 to make the retractable shaft 12 go up and down smoothly inside the inner sleeve tube 151.

The lower portion of the inner sleeve 11 adapts the clip of Taiwanese Patent Publication No. 579917 of this applicant. An awl connecting tube 114 extends from the bottom of the inner sleeve 11, the bottom of inner sleeve 11 inserts into the outer turning tube 51 of the clip base 5 to have the awl connecting tube 114 connect to the board axis 512 on the center of the inner separating board 511 by a screw 55 to combine the two with a connector; a tenon hole 115 and an air hole 116 are vertically installed on one side of the awl connecting tube 114 to insert into the tenon 513 on the inner separating board 511, when users revolve the outer turning tube 51, the inner sleeve 11 is brought together; a clip bolt 52 in installed from the bottom of the outer turning tube 51, two corresponding bolt holes 521 are installed on the board holes 514 and have connectors pass through bolt holes, fix on the board holes 514; several bolt pipes 522 are on top of the clip bolt 52 and are wedged onto the corresponding turning tube wedge holes 515 on the inner separating board 511 to have the clip bolts 52 revolve with the outer turning tube 51 synchronously; a awl bolt slot 523 stretches downward from the center of the clip bolt 52 to combine a screw shank 524.

The clip bolt 52 is inserted into a base step 531 of the bottom base 53, the corresponding bolt slot 523 has a corresponding awl base slot 532 and the screw shank 524 is positioned therein. The screw shank 524 stretches downward and connects to an clip slice 54, when users revolve the outer turning tube 51, the screw shank 524 turns synchronously, at the same time the clip slice 54 rises or descends immediately, the bottom board 541 and the bottom base 53 clip engage the stationary object, such as the desk to fix the structure firmly on the desk. In fact, the clip base 5 of the present invention is only an example; the clip base can also apply the clip of the US Patent S/N 10/737,810.

In order to avoid the vacuum condition between the inner sleeve 11 and the retractable shaft 12 influences the adjustment of the retractable shaft 12, the air hole 116 on the bottom of the inner sleeve 11, the bolt pipe 522 between the outer turning tube 51 and the clip bolt 52, and the passing hole 533 on the base step 531 form an air path to prevent vacuum condition.

The connecting axis 2 is in torsion structure with a pillar shape connecting base 21 and a central axis slot 211, an clip cover 22 with two slices 23 each of the two slices 23 beside two compression rings 24 one positioned on a top and one positioned on a bottom, all covered by the connecting base 21; the supporting axis 123 of the retractable shaft 12 passes the wedge holes 231 of two slices 23, the axis slot 211 in between and combines the supporting axis 123 with a connecting device to wrap and compress the connecting base 21 and let the clip cover 22 revolve 360°.

Several slice holes 232 are on the rim of the slices 23, a protruding ring tenon 241 is on one side of each of the compression rings 24 to insert into the slice holes 232 for positioning. A decorating cover 26 each with cover tenon 261 to insert into the slice holes 232 is installed externally to the slices 23.

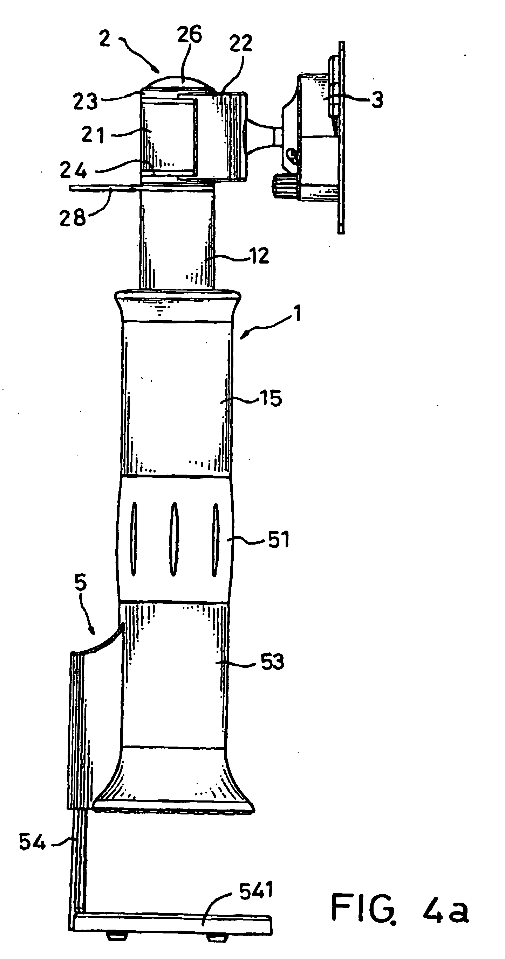

As shown in FIG 4a, the connecting axis 2 connects to a connecting mechanism 3 on one side to connect the article, such as the flat panel displays, to rise, descend, revolve and adjust in all directions.

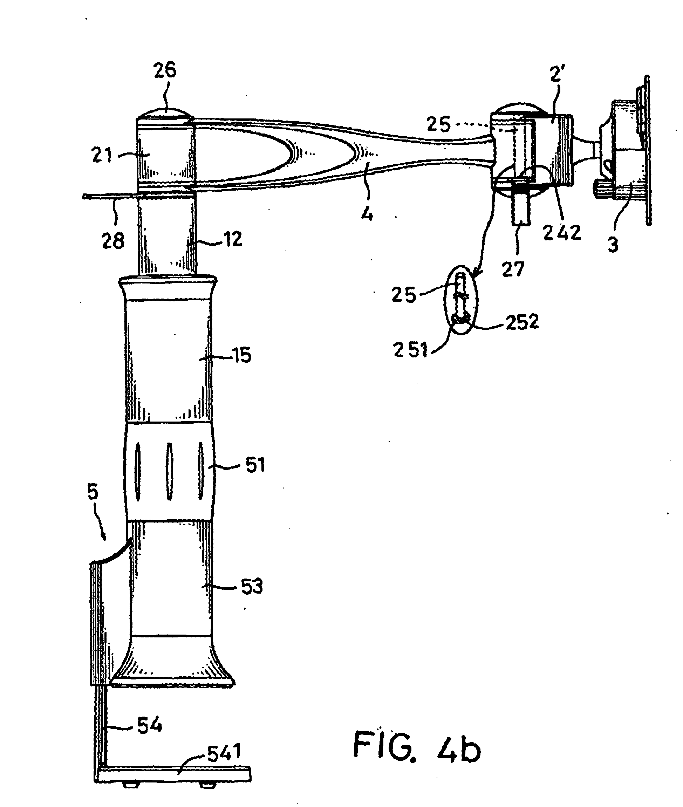

As shown in FIG. 4b, the connecting axis 2 connects to a remote connecting axis 2' with a supporting rack 4, the remote connecting axis 2' also connects to a connecting mechanism 3 to support the articles; such mechanism makes the present invention with two connecting axis stretches horizontally and offers more application convenience.

A wire organizing mechanism (27) is located beneath the connecting axis 2' and includes a fastener part 242 located on each of two sides of the compression ring 24 to connect two sides of a fastening ring 27 on the fastening parts 242 and form a room for round wires. Another wire organizing mechanism 28 is located between the retractable shaft 12 and the connecting base 21; a pair of fastening curves 281, 282 with different stretching distance forms a ring for wire to pass through and a round.

The supporting axis 123 is replaced by an axis bolt 25 in the connecting axis 2' as axis, one end of the axis bolt 25 has at least one flat rim 252, the protruding stoppers 233 of the slices 23 stop the flat rim 252 from revolving.

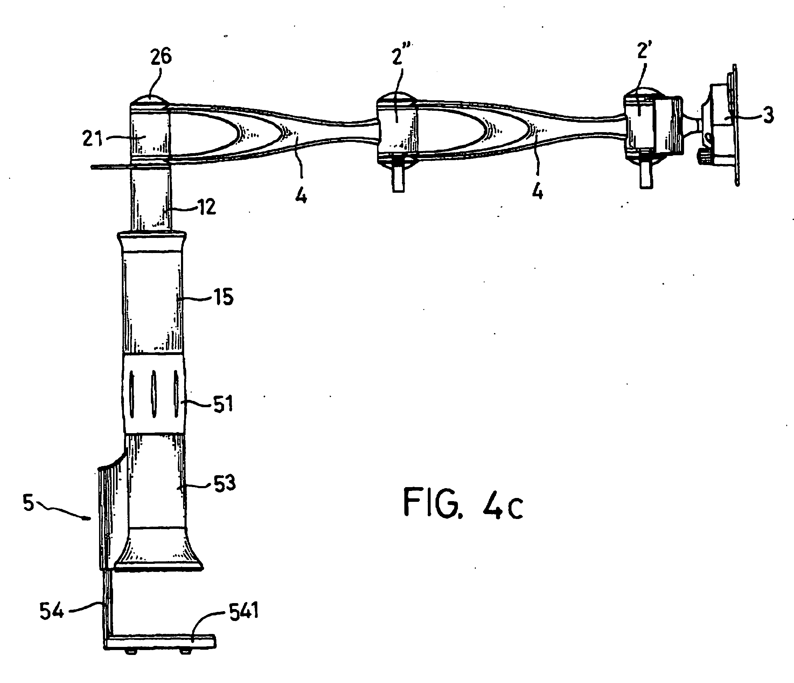

As shown in FIG. 4c, a middle connecting axis 2" is between the connecting axis 2 and the remote connecting axis 2', two supporting racks are on both sides of the middle connecting axis 2" and connect to the connecting axis 2 and the remote connecting axis 2" respectively, the other side of the remote connecting axis connects to a connecting mechanism 3 to connect the flat panel displays.

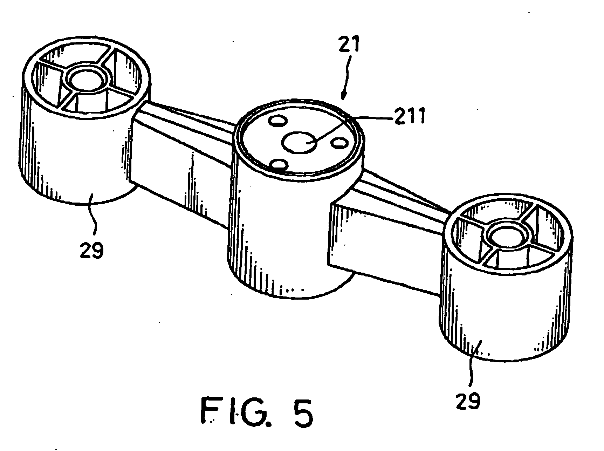

Referring to FIG 5, another application example of the connecting base 21, both sides of the connecting base 21 connect to a side connecting axis 29 to connect to the supporting rack 4 and the connecting mechanism 3 and able to support two set of articles for more practical utility.

While a preferred embodiment of the invention has been shown and described in detail, it will be readily understood and appreciated that numerous omissions, changes and additions may be made without departing from the scope of the invention.

## Claims

1. A suspension arm for an article comprising:
a rising/descending device (1) consisting of an inner sleeve (11), a retractable shaft (12), an outer sleeve (15) connected to said inner sleeve (11), said outer sleeve (15) being capable of revolving on said inner sleeve (11)
**characterized in that** it further comprises:
an elastic body (13) inside the retractable shaft (12),
a clip ring (14) on the top open of said outer sleeve (15),
wherein the outer sleeve (15) is selectively rotatable to reduce pressure by the clip ring (14) on the retractable shaft (12), the retractable shaft (12) being movable upwardly and downwardly within said outer sleeve (15), and comprising further:
a connecting axis (2) being frictionally connected to a pillar shape connecting base (21) having a central axis slot (211), a clip cover (22) with two slices (23), each of the two slices (23) being located beside one of two compression rings (24), all covered by the connecting base (21), a supporting axis (123) of said retractable shaft (12) passing through wedge holes (231) of said two slices (23) and through the central axis slot (211) located in between the two slices, said supporting axis (123) being combined with a connecting device wrapping and compressing the connecting base (21) and allowing said clip cover (22) to revolve;
a connecting mechanism (3) connected to said clip cover (22), said connecting mechanism (3) being connectable to the article to rise, descend, revolve and adjust in all directions with said rising/descending device (1); and
a tight connector (122) located around said retractable shaft (12), the tight connector (122) including at least one O ring (122b) located between two shaft rings (122a) to connect to said inner sleeve (11).

2. The suspension arm recited in claim 1, wherein a clip base (5) is connected to the bottom of said rising/descending device (1).

3. The suspension arm recited in claim 1, wherein a threaded section (111) is located around the middle of said inner sleeve (11) and tube threads (152) are installed on an inside of said outer sleeve (15) to connect with said threaded section (111) of said inner sleeve (11) making the outer sleeve (15) to be capable of revolving around said inner sleeve (11).

4. The suspension arm recited in claim 1, wherein a fastening section (112) is located at the top of said inner sleeve (11) to connect to the clip ring (14).

5. The suspension arm recited in claim 1, wherein said elastic body (13) is a spring.

6. The suspension arm recited in claim 1, wherein said clip ring (14) comprises a plurality of slots (142) located at its top and several oblique wings (143) bent towards its center.

7. The suspension arm recited in claim 6, wherein a compression wall (153) is located at the top of said sleeve tube (151) in order to engage with said oblique wings (143) of said clip ring (14).

8. The suspension arm recited in claim 1, wherein a wall slot (154) is formed on an opening of a compression wall (153) of the outer sleeve (15) and wherein an O ring (155) is placed onto said wall slot (154) to engage with said retractable shaft (12).

9. The suspension arm recited in claim 1, wherein at least one air hole (116) is located at the bottom of said inner sleeve (11).

10. The suspension arm recited in claim 1, wherein a plurality of slice holes (232) are located on the rim of said slices (23) and wherein a protruding ring tenon (241) is located on one side of each of said compression rings (24) in order to be inserted into said slice holes (232) for positioning.

11. The suspension arm recited in claim 1, further comprising a decorating cover (26) having a cover tenon (261) inserted into said slice holes (232) and being installed externally to said slices (23).

12. The suspension arm recited in claim 1, further comprising a wire organizing mechanism (28) located between said retractable shaft (12) and said connecting base (21) and having a pair of fastening curves (281, 282) with different stretching distance in order to form a ring for wires to pass through and around.

13. The suspension arm recited in claim 1, wherein said connecting axis (2) is connected to a remote connecting axis (2') of a supporting rack (4), said remote connecting axis (2') being connected to said connecting mechanism (3) to support the articles to stretch out horizontally, said remote connecting axis having a compression ring and slices.

14. The suspension arm recited in claim 1, wherein a middle connecting axis (2") is located between said connecting axis (2) and a remote connecting axis (2') and between two supporting racks (4), each supporting rack is on a side of said middle connecting axis (2"), one supporting rack (4) being also connected to said connecting axis (2) and the other supporting rack (4) being also connected to said remote connecting axis (2'), the other side of said remote connecting axis (2') connects to said connecting mechanism (3), said middle connecting axis having a compression ring and slices.

15. The suspension arm recited in claim 13 or 14, wherein a wire organizing mechanism is located beneath one of said remote connecting axis (2') and said middle connecting axis (2") when the suspension arm is as recited in claim 14, a fastener part (242) being located on one side of said compression ring (24) in order to connect two sides of a fastening ring (27) to said fastening part (242) and in order to form a room to round wires.

16. The suspension arm recited in claim 13 or 14, further comprising an axis bolt (25) located as an axis in said remote connecting axis (2') and in said middle connecting axis (2") when the suspension arm is as recited in claim 14, one end of said axis bolt (25) having at least one flat rim (252), the slices of said remote (2') and middle connecting axis (2") when the suspension arm is as recited in claim 14 having protruding stoppers (233) in order to stop said flat rim (252) from revolving.

17. The suspension arm recited in claim 1, wherein both sides of said connecting base (21) are connected to a side connecting axis (29) in order to connect a supporting rack (4) and said connecting mechanism (3).

## Patentansprüche

1. Aufhängungsarm für einen Gegenstand, aufweisend:
eine Anhebe/Absenkvorrichtung (1), die aus einer Innenhülse (11), einer verschiebbaren Welle (12) und einer Außenhülse (15) besteht, die mit der Innenhülse (11) verbunden ist, wobei die Außenhülse (15) zum Drehen um die Innenhülse (11) geeignet ist,
**dadurch gekennzeichnet, dass** diese ferner aufweist:
einen Federkörper (13) an der Innenseite der verschiebbaren Welle (12),
einen Klemmring (14) an dem offenen oberen Ende der Außenhülse (15), wobei die Außenhülse (15) wahlweise drehbar ist, um den Druck durch den Klemmring (14) an der verschiebbaren Welle (12) zu reduzieren, wobei die verschiebbare Welle (12) innerhalb der Außenhülse (15) nach oben und nach unten bewegbar ist, und ferner aufweisend:
eine Verbindungsachse (2), die mit einer säulenförmigen Verbindungsbasis (21) reibend verbunden ist, die einen Mittelachsenschlitz (211) aufweist, wobei eine Klemmabdeckung (22) mit zwei Scheiben (23) vollständig über die Verbindungsbasis (21) gedeckt ist, wobei jede der beiden Scheiben (23) an einem von zwei Kompressionsringen (24) angeordnet ist, wobei eine Stützachse (123) der verschiebbaren Welle (12) durch Keilöffnungen (231) der beiden Scheiben (23) und durch den Mittelachsenschlitz (211) hindurchtritt, der zwischen den beiden Scheiben angeordnet ist, wobei die Stützachse (123) mit einer Verbindungsvorrichtung verbunden ist, welche die Verbindungsbasis (21) umhüllt und komprimiert und ermöglicht, dass sich die Klemmabdeckung (22) dreht,
einen Verbindungsmechanismus (3), der mit der Klemmabdeckung (22) verbunden ist, wobei der Verbindungsmechanismus (3) mit dem Gegenstand verbindbar ist, um diesen mit der Anhebe/Absenkvorrichtung (1) anzuheben, abzusenken, zu drehen und in allen Richtungen zu verstellen, und
einen Pressverbinder (122), der um die verschiebbare Welle (12) herum angeordnet ist, wobei der Pressverbinder (122) wenigstens einen O-Ring (122b) aufweist, der zwischen zwei Wellenringen (122a) zum Verbinden mit der Innenhülse (11) angeordnet ist.

2. Aufhängungsarm nach Anspruch 1, wobei eine Klemmbasis (5) mit der Unterseite der Anhebe/Absenkvorrichtung (1) verbunden ist.

3. Aufhängungsarm nach Anspruch 1, wobei ein Gewindeabschnitt (111) um die Mitte der Innenhülse (11) herum angeordnet ist, und ein Rohrgewinde (152) an einer Innenseite der Außenhülse (15) zum Verbinden mit dem Gewindeabschnitt (111) der Innenhülse (11) installiert ist, was die Außenhülse (15) in die Lage versetzt, sich um die Innenhülse (11) herum zu drehen.

4. Aufhängungsarm nach Anspruch 1, wobei ein Befestigungsabschnitt (112) an dem oberen Ende der Innenhülse (11) zum Verbinden mit dem Klemmring (14) angeordnet ist.

5. Aufhängungsarm nach Anspruch 1, wobei der Federkörper (13) eine Feder ist.

6. Aufhängungsarm nach Anspruch 1, wobei der Klemmring (14) eine Mehrzahl von Schlitzen (142), die an seinem oberen Ende angeordnet sind, und mehrere schräge Flügel (143) aufweist, die in Richtung zu seiner Mitte gebogen sind.

7. Aufhängungsarm nach Anspruch 6, wobei eine Kompressionswand (153) an dem oberen Ende des Hülsenrohres (151) angeordnet ist, um mit den schrägen Flügeln (143) des Klemmringes (14) in Eingriff zu stehen.

8. Aufhängungsarm nach Anspruch 1, wobei eine Wandnut (154) in einer Öffnung einer Kompressionswand (153) der Außenhülse (15) ausgebildet ist, und wobei ein O-Ring (155) in der Wandnut (154) platziert ist, um mit der verschiebbaren Welle (12) in Eingriff zu stehen.

9. Aufhängungsarm nach Anspruch 1, wobei wenigstens eine Luftöffnung (116) an der Unterseite der Innenhülse (11) angeordnet ist.

10. Aufhängungsarm nach Anspruch 1, wobei eine Mehrzahl von Scheibenöffnungen (232) in dem Rand der Scheiben (23) angeordnet sind, und wobei ein vorstehender Ringzapfen (241) an der einen Seite jedes der Kompressionsringe (24) angeordnet ist, um in die Scheibenöffnungen (232) zum Positionieren eingesetzt zu werden.

11. Aufhängungsarm nach Anspruch 1, ferner aufweisend eine Dekorationsabdeckung (26), die einen in die Scheibenöffnungen (232) eingesetzten Abdeckungszapfen (261) aufweist und außen auf den Scheiben (23) installiert ist.

12. Aufhängungsarm nach Anspruch 1, ferner aufweisend einen Leitungsverlegungsmechanismus (28), der zwischen der verschiebbaren Welle (12) und der Verbindungsbasis (21) angeordnet ist und ein Paar Befestigungskurven (281, 282) mit unterschiedlicher Dehnungsdistanz aufweist, um einen Ring für Leitungen zum Durch- und Herumführen zu bilden.

13. Aufhängungsarm nach Anspruch 1, wobei die Verbindungsachse (2) mit einer entfernten Verbindungsachse (2') eines Stützträgers (4) verbunden ist, wobei die entfernte Verbindungsachse (2') mit dem Verbindungsmechanismus (3) verbunden ist, um die Gegenstände zum horizontalen Herausstrecken abzustützen, wobei die entfernte Verbindungsachse einen Kompressionsring und Scheiben aufweist.

14. Aufhängungsarm nach Anspruch 1, wobei eine mittlere Verbindungsachse (2") zwischen der Verbindungsachse (2) und einer entfernten Verbindungsachse (2') und zwischen zwei Stützträgern (4) angeordnet ist, wobei jeder Stützträger an einer Seite der mittleren Verbindungsachse (2") ist, wobei der eine Stützträger (4) auch mit der entfernten Verbindungsachse (2') verbunden ist, wobei die andere Seite der entfernten Verbindungsachse (2') mit dem Verbindungsmechanismus (3) verbunden ist, und die mittlere Verbindungsachse einen Kompressionsring und Scheiben aufweist.

15. Aufhängungsarm nach Anspruch 13 oder 14, wobei ein Leitungsverlegungsmechanismus unter der einen der entfernten Verbindungsachsen (2') und der mittleren Verbindungsachse (2") angeordnet ist, wenn der Aufhängungsarm nach Anspruch 14 ausgeführt ist, wobei ein Befestigungselement (242) an der einen Seite des Kompressionsringes (24) angeordnet ist, um zwei Seiten eines Befestigungsringes (27) mit dem Befestigungselement (242) zu verbinden und um einen Raum zum Abrunden von Leitungen zu bilden.

16. Aufhängungsarm nach Anspruch 13 oder 14, ferner aufweisend einen Achsbolzen (25), der als eine Achse in der entfernten Verbindungsachse (2') und in der mittleren Verbindungsachse (2") angeordnet ist, wenn der Aufhängungsarm nach Anspruch 14 ausgeführt ist, wobei das eine Ende des Achsbolzens (25) wenigstens einen flachen Rand (252) aufweist, wobei die Scheiben der entfernten (2') und der mittleren Verbindungsachse (2") vorstehende Stopper (233) aufweist, wenn der Aufhängungsarm nach Anspruch 14 ausgeführt ist, um den flachen Rand (252) beim Drehen zu stoppen.

17. Aufhängungsarm nach Anspruch 1, wobei beide Seiten der Verbindungsbasis (21) mit einer Seitenverbindungsachse (29) verbunden sind, um einen Stützträger (4) und den Verbindungsmechanismus (3) zu verbinden.

## Revendications

1. Bras de suspension pour un article comprenant :
- un dispositif de montée/descente (1) consistant en un manchon interne (11), un arbre rétractable (12) et un manchon externe (15) relié audit manchon interne (11), ledit manchon externe (15) étant capable de tourner sur ledit manchon interne (11),
**caractérisé par le fait qu'**il comprend en outre :
- un corps élastique (13) à l'intérieur de l'arbre rétractable (12),
- une bague de serrage (14) sur l'ouverture supérieure dudit manchon externe (15),
le manchon externe (15) étant apte à tourner de manière sélective pour réduire la pression de la bague de serrage (14) sur l'arbre rétractable (12), l'arbre rétractable (12) étant mobile vers le haut et vers le bas à l'intérieur dudit manchon externe (15), et comprenant en outre :
- un axe de liaison (2) qui est relié par frottement à une base de liaison en forme de pilier (21) ayant une fente d'axe central (211), un couvercle de serrage (22) avec deux rondelles (23), chacune des deux rondelles (23) étant située à côté de l'une de deux bagues de compression (24), toutes recouvertes par la base de liaison (21), un axe de support (123) dudit arbre rétractable (12) passant à travers des trous coniques (231) desdites deux rondelles (23) et à travers la fente d'axe central (211) située entre les deux rondelles, ledit axe de support (123) étant combiné avec un dispositif de liaison entourant et comprimant la base de liaison (21) et permettant audit couvercle de serrage (22) de tourner ;
- un mécanisme de liaison (3) relié audit couvercle de serrage (22), ledit mécanisme de liaison (3) étant apte à être relié à l'article pour monter, descendre, tourner et s'ajuster dans toutes les directions avec ledit dispositif de montée/descente (1) ; et
- un raccord sans jeu (122) situé autour dudit arbre rétractable (12), le raccord sans jeu (122) comprenant au moins un joint torique (122b) situé entre deux segments pour arbre (122a) pour une liaison audit manchon interne (11).

2. Bras de suspension selon la revendication 1, dans lequel une base de serrage (5) est reliée à la partie inférieure dudit dispositif de montée/descente (1).

3. Bras de suspension selon la revendication 1, dans lequel une section filetée (111) est située autour du milieu dudit manchon interne (11) et des filetages de tube (152) sont installés sur un intérieur dudit manchon externe (15) pour une liaison à ladite section filetée (111) dudit manchon interne (11), permettant au manchon externe (15) d'être capable de tourner autour dudit manchon interne (11).

4. Bras de suspension selon la revendication 1, dans lequel une section de fixation (112) est située à la partie supérieure dudit manchon interne (11) pour une liaison à la bague de serrage (14).

5. Bras de suspension selon la revendication 1, dans lequel ledit corps élastique (13) est un ressort.

6. Bras de suspension selon la revendication 1, dans lequel ladite bague de serrage (14) comprend une pluralité de fentes (142) situées à sa partie supérieure et plusieurs ailes obliques (143) courbées vers son centre.

7. Bras de suspension selon la revendication 6, dans lequel une paroi de compression (153) est située à la partie supérieure dudit tube de manchon (151) afin de venir en prise avec lesdites ailes obliques (143) de ladite bague de serrage (14).

8. Bras de suspension selon la revendication 1, dans lequel une fente de paroi (154) est formée sur une ouverture d'une paroi de compression (153) du manchon externe (15) et un joint torique (155) est placé sur ladite fente de paroi (154) pour venir en prise avec ledit arbre rétractable (12).

9. Bras de suspension selon la revendication 1, dans lequel au moins un évent (116) est situé à la partie inférieure dudit manchon interne (11).

10. Bras de suspension selon la revendication 1, dans lequel une pluralité de trous de rondelles (232) sont situés sur le rebord desdites rondelles (23) et un tenon annulaire en saillie (241) est situé sur un côté desdits bagues de compression (24) afin d'être introduit dans lesdits trous de rondelles (232) pour le positionnement.

11. Bras de suspension selon la revendication 1, comprenant en outre un couvercle décoratif (26) ayant un tenon de couvercle (261) introduit lesdits trous de rondelles (232) et qui est installé de manière externe auxdites rondelles (23).

12. Bras de suspension selon la revendication 1, comprenant en outre un mécanisme d'organisation de câbles (28) situé entre ledit arbre rétractable (12) et ladite base de liaison (21) et ayant une paire de courbes de fixation (281, 282) avec différentes distances d'étirement afin de former une bague à travers laquelle et autour de laquelle les câbles passent.

13. Bras de suspension selon la revendication 1, dans lequel ledit axe de liaison (2) est relié à un axe de liaison distant (2') d'un support (4), ledit axe de liaison distant (2') étant relié audit mécanisme de liaison (3) pour supporter les articles devant être étirés horizontalement, ledit axe de liaison distant ayant une bague de compression et des rondelles.

14. Bras de suspension selon la revendication 1, dans lequel un axe de liaison intermédiaire (2") est situé entre ledit axe de liaison (2) et un axe de liaison distant (2') et entre deux supports (4), chaque support étant sur un côté dudit axe de liaison intermédiaire (2''), un support (4) étant également relié audit axe de liaison (2) et l'autre support (4) étant également relié audit axe de liaison distant (2'), l'autre côté dudit axe de liaison distant (2') se relie audit mécanisme de liaison (3), ledit axe de liaison intermédiaire ayant une bague de compression et des rondelles.

15. Bras de suspension selon la revendication 13 ou la revendication 14, dans lequel un mécanisme d'organisation de câbles est située au-dessous de l'un dudit axe de liaison distant (2') et dudit axe de liaison intermédiaire (2") lorsque le bras de suspension est tel que défini à la revendication 14, une partie de fixation (242) étant située sur un côté de ladite bague de compression (24) afin de relier deux côtés d'une bague de fixation (27) à ladite partie de fixation (242) et afin de former un espace pour enrouler des câbles.

16. Bras de suspension selon la revendication 13 ou la revendication 14, comprenant en outre un axe (25) situé comme un axe dans ledit axe de liaison distant (2') et dans ledit axe de liaison intermédiaire (2'') lorsque le bras de suspension est tel que défini à la revendication 14, une extrémité dudit axe (25) ayant au moins un rebord plat (252), les rondelles desdits axes de liaison distant (2') et intermédiaire (2'') lorsque le bras de suspension est tel que défini à la revendication 14, ayant des arrêts en saillie (233) afin d'arrêter la rotation dudit rebord plat (252).

17. Bras de suspension selon la revendication 1, dans lequel deux côtés de ladite base de liaison (21) sont reliés à un axe de liaison latéral (29) pour une liaison à un support (4) et audit mécanisme de liaison (3).
